# EUROPÄISCHE PATENTSCHRIFT

(11) **EP 2 222 412 B1**
(45) Veröffentlichungstag und Bekanntmachung des Hinweises auf die Patenterteilung: **18.09.2013**
(21) Anmeldenummer: 08864141.0
(22) Anmeldetag: 05.12.2008
(51) Int. Cl.: B05B 13/04, B25J 9/00, B05B 15/12

(54) **ANORDNUNG VON LACKIERROBOTERN**
ARRANGEMENT OF PAINTING ROBOTS
AGENCEMENT DE ROBOTS DE PEINTURE

(30) Priorität: 20.12.2007 DE 102007062403
(43) Veröffentlichungstag der Anmeldung: 01.09.2010
(73) Patentinhaber: ABB AG, 68309 Mannheim (DE)
(72) Erfinder: VANDEPITTE, Frederik, 35447 Reiskirchen (DE)
(86) Internationale Anmeldenummer: PCT/EP2008/010294
(87) Internationale Veröffentlichungsnummer: WO 2009/080183

(56) Entgegenhaltungen:
- WO-A-01/68267
- WO-A-2008/071329
- DE-A1-102004 033 640
- DE-A1-102006 045 642
- GB-A- 2 177 946
- JP-A- 1 266 870
- US-A- 4 768 462

## Beschreibung

Die Erfindung betrifft eine Anordnung von ortsfest montierten Lackierrobotern gemäβ dem Oberbegriff vom Anspruch 1.

Es ist allgemein bekannt, dass für die industrielle Lackiertechnik Lackierroboter verwendet werden. Diese sind üblicherweise in einer Lackierkabine angeordnet, durch welche ein Fördersystem läuft, mit welchem die zu lackierend Objekte in die Lackierkabine ein- und ausförderbar sind. Die Lackierroboter sind üblicherweise mit ihrer Roboterbasis im unteren Bereich der Lackierkabine angeordnet, das heißt auf ähnlicher vertikaler Höhe gegenüber dem Boden der Lackierkabine wie die zu lackierenden Objekte, beispielsweise Automobilkarosserien oder Stossfänger.

Die Anordnung der Lackierroboter erfolgt üblicherweise entlang einer Linie parallel zur Förderrichtung des Fördersystems. Je nach Anwendung sind die Lackierroboter auch auf einer Verfahrachse angeordnet, welche ebenfalls parallel zur Förderrichtung des Fördersystems verläuft.

Nachteilig an dieser Anordnung ist insbesondere, dass hieraus ein hoher Grundflächenbedarf einer Lackierkabine resultiert. Die Freiheit bei der Gestaltung der Bewegungsprogramme der Lackierroboter ist ebenfalls nachteilig beeinflusst, weil die jeweilige Roboterbasis in einer derartigen Anordnung eine Störkontur für den Lackierroboter darstellt.

Als Lösungsansatz sind Lackierroboter bekannt, deren Basis erhöht gegenüber dem Lackierkabinenboden angeordnet ist. Diese stehen beispielsweise auf einer geeigneten Säule im Wandbereich der Lackierkabine. Ein Beispiel für einen solchen Roboter ist der IRB 5500 der Firma ABB. Die Anordnung derartiger Lackierroboter erfolgt seitdem ebenfalls entlang einer Linie parallel zur Förderrichtung des Fördersystems.

Ein Beispiel für eine gattungsgemässe Anordnung, b.z.w einen derartigen Lackierroboter, welcher oberhalb des zu lackierenden Objektes angeordnet ist, sind in der Patentschrift DE 10 2004 033 640 A1 offenbart.

Auf diese Weise liegt der eingenommene Raum eines Lackierroboters überwiegend in einen Bereich der Lackierkabine, welcher oberhalb des zu lackierenden Objektes liegt. In vorteilhafter Weise ist hierdurch eine schmalere Lackierkabinenbreite realisierbar. Lediglich der Roboterarm wird entsprechend dem Lackierprogramm teilweise unterhalb der horizontalen Ebene bewegt. Typische Lackierkabinenbreiten für Automobilkarosserien liegen beispielsweise bei 5,5m, es sind durch die erfindungsgemäße Anordnung Kabinenbreiten von unter 5m realisierbar.

Nachteilig an einer derartigen Anordnung ist, dass insbesondere der Längenbedarf einer Lackierkabine steigt, weil derartige Roboter zur Reduktion einer Kollisionsgefahr in einem größeren Abstand parallel zur Förderrichtung des Fördersystems angeordnet sind als herkömmliche feststehende Roboter im Bodenbereich der Lackierkabine. Dieser höhere Abstand resultiert aus der überwiegenden Arbeitsrichtung des Roboters vertikal nach unten.

Ausgehend von diesem Stand der Technik ist es Aufgabe der Erfindung, eine Anordnung von derartigen Lackierrobotern anzugeben, welche den Platzbedarf in einer Lackierkabine reduziert, insbesondere den Längenbedarf.

Diese Aufgabe wird erfindungsgemäß gelöst durch eine Anordnung von Lackierrobotern mit den im Anspruch 1 angegebenen Merkmalen.

Als vorgegebenes Objekt ist vorzugsweise ein bestimmungsgemäß zu lackierendes Objekt zu wählen, welches die größten Abmessungen, insbesondere in vertikaler Richtung aufweist, die innerhalb der betreffenden Lackierkabine während des Lackierbetriebes mit erfindungsgemäßer Lackierroboteranordnung zu erwarten sind. Bei der Auswahl des Objektes ist ebenfalls dessen Lackierposition zu berücksichtigen. Bei lackiergemäßer Anordnung von mehreren zu lackierenden Objekten, beispielsweise Stossfängern, auf einer gemeinsamen Haltevorrichtung, ist das vertikal höchste Objekt maßgeblich für die Lage der horizontalen Ebene. Eine absolute Begrenzung der vertikalen Höhe der horizontalen Ebene ist gegebenenfalls auch im produktionstechnischen Umfeld einer Lackierkabine gegeben. So hat beispielsweise ein der Lackierkabine fördertechnisch vor- oder nachgeschalteter Ofen eine vorgegebene Durchfahrtshöhe, welche die vertikal maximal zulässige Höhe eines zu lackierenden Objektes begrenzt.

Die vertikale Mindesthöhe der jeweiligen Lackierroboter liegt über dem vertikal höchsten Punkt eines vorgegebenen zu lackierenden Objektes in Lackierposition, d.h. bei Anordnung des Objektes auf einem dafür vorgesehenen Warenträger oder auf einem Haltemechanismus. Vorzugsweise ist die gesamte Roboterbasis oberhalb dieses vertikal höchsten Punktes angebracht. Damit beträgt ein besonders geeigneter vertikaler Abstand des Bezugspunktes eines Lackierroboters zu dem vertikal höchsten Punkt des zu lackierenden Objektes beispielsweise 0,5 bis 1,5m.

Durch einen erfindungsgemäßen Versatz der Lackierroboter in horizontaler Richtung quer zur vertikalen Ebene können benachbarte Lackierroboter in vorteilhafter Weise näher aneinander angeordnet werden und der Platzbedarf der Lackierkabine zusätzlich verringert werden. Die Arbeitsbereiche der Lackierroboter hinterschneiden sich auf diese Weise.

In ähnlicher Weise lassen sich die Arbeitsbereiche derartiger benachbarter Lackierroboter durch einen Versatz in vertikaler Richtung entzerren

In einer weiteren Ausgestaltung des Erfindungsgegenstandes ist wenigstens einer der wenigstens zwei Lackierroboter derart angeordnet ist, dass dessen erste Drehachse innerhalb eines Winkelbereiches von -45° bis +45° gegenüber einer horizontalen Ebene verläuft.

Auf diese Wiese ist die Bewegungsrichtung des Roboterarmes der ersten Achse überwiegend parallel zur vertikalen Ebene. Der gemeinsame Arbeitsbereich benachbarter Roboter wird so in besonders vorteilhafter Weise reduziert.

In einer Ausführungsform des Erfindungsgegenstandes ist das vorgegebene zu lackierenden Objekt eine Automobilkarosserie.

Hier sind die Vorteile der erfindungsgemäßen Anordnung besonders ausgeprägt, weil eine Automobilkarosserie mit ca. 1,6m bis 2m eine hohe Breite aufweist und die örtliche Trennung von Roboterbasis und zu lackierendem Objekt eine besondere Reduktionsmöglichkeit der Lackierkabinenbreite ermöglicht.

In einer weiterhin bevorzugten Ausführungsform des Erfindungsgegenstandes sind die wenigstens zwei Lackierroboter mit ihren jeweiligen Bezugspunkten wenigstens 1,5m oberhalb des Lackierkabinenbodens angeordnet. Dies entspricht einer typischen vertikalen Höhe einer Automobilkarosserie.

In einer besonders bevorzugten Ausführungsform beträgt der vertikale Versatz der wenigstens zwei Bezugspunkte wenigstens 0,25m.

Dies entspricht in etwa dem Durchmesser eines Roboterarmes, so dass diese problemlos in zwei aneinandergrenzenden Bewegungsebenen aneinander vorbei bewegbar sind.

Ähnliche Vorteile ergeben sich aus einem Versatz von wenigstens 0,25m in horizontaler quer zur gedachten vertikalen Ebene verlaufender Richtung. Bevorzugter Wert ist allerdings bei den letztgenannten Werten 0,5m. Dies ermöglicht eine besonders problemloses aneinander vorbei Führen zweier Roboterarme.

In einer weiteren Ausführungsform sind wenigstens zwei Lackierroboter jeweils im ersten und zweiten Bereich der Lackierkabine angeordnet.

Dies ermöglicht insbesondere bei Automobilkarosserien ein beidseitiges und symmetrisches Erreichen aller zu lackierender Flächen.

In einer bevorzugten Ausführungsform sind Lackierroboter in dem ersten Bereich der Lackierkabine und dem zweiten Bereich der Lackierkabine jeweils gegenüberliegend mit höchstens einem horizontalen Versatz der Bezugspunkte parallel zur gedachten vertikalen Ebene von 1,2m angeordnet.

Diese Ausführungsform ermöglicht es in vorteilhafter Weise die benötigte Lackierkabinenlänge weiter zu reduzieren. Ein Mindestversatz gegenüberliegender Lackierroboter parallel zur vertikalen Ebene ist vorteilhaft um Kollisionen gegenüberliegender Roboter, welche einen gespiegelten Bewegungsprogrammablauf aufweisen, zu vermeiden. Dies lässt sich allerdings auch durch ein geeignetes Aufteilen der Arbeitsumfänge der Lackierroboter vermeiden. So kann ein Roboter beispielsweise vorzugsweise horizontale Flächen einer Automobilkarosserie lackieren und der ihm gegenüberliegende vertikale Flächen.

In einer weiteren Ausführungsform werden baugleiche Lackierroboter verwendet.

Hierdurch sind Arbeitsbereiche aufgrund ihrer prinzipiellen Gleichheit besonders einfach.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine Draufsicht auf eine beispielhafte erste Lackierkabine mit einer erfindungsgemäßen Anordnung mit vier Lackierrobotern
- Fig. 2: eine Seitenansicht einer beispielhaften zweiten Lackierkabine mit einer erfindungsgemäßen Anordnung mit vier Lackierrobotern

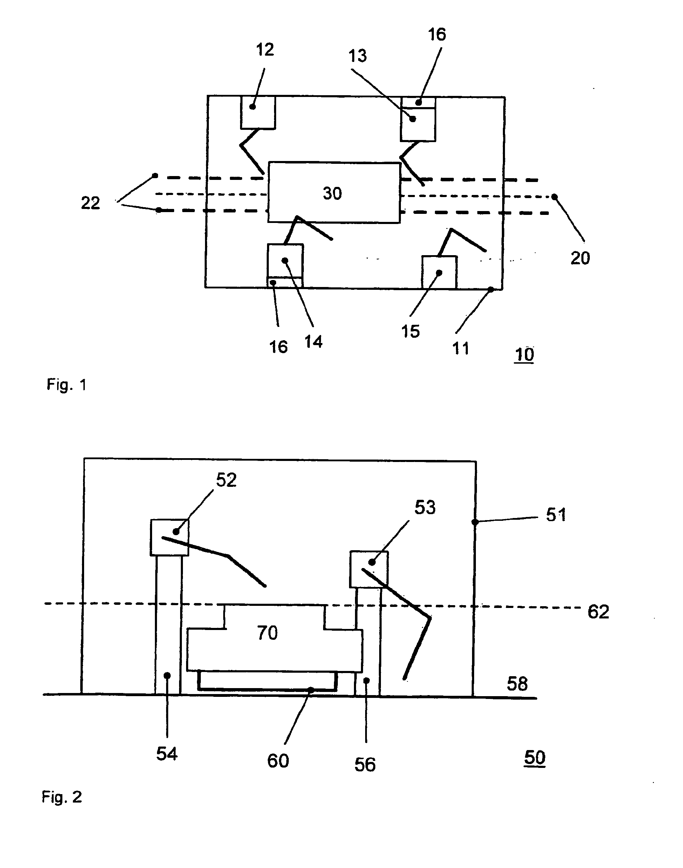

Fig. 1 zeigt eine Draufsicht auf eine beispielhafte Lackierkabine 10 mit vier baugleichen Lackierrobotern 12, 13, 14, 15. Der Roboter 13 ist durch Zwischenfügen eines Zwischenstücks 16 gegenüber dem Roboter quer zur vertikalen Ebene 20 in horizontaler Richtung versetzt. Dadurch ist der seitliche Arbeitsbereich des Roboters 13 mehr in die Kabinenmitte verschoben worden. Der seitliche Arbeitsbereich des Lackierroboters 12 ist nicht zusätzlich in Richtung der Kabinenmitte verschoben, so dass der gemeinsame Arbeitsbereich, welcher mit einem Kollisionsrisiko der Lackierroboter 12 und 13 verbunden ist, dadurch reduziert wurde. Alternativ ist bei Beibehaltung des Umfangs des gemeinsamen Arbeitsbereiches ein Verringern des Abstandes der Roboter 12 und 13 parallel zur Ebene 20 denkbar.

Der horizontale Abstand quer zur Förderrichtung zwischen den gegenüber angeordneten Lackierrobotern 12 und 14 sowie 13 und 15 ist gleich. Je nach Lackierstrategie ist es dadurch einfach möglich, den Arbeitsumfang des Lackierroboters 12 und des Lackierroboters 15 sowie den des Lackierroboters 13 und 14 ähnlich zu gestalten. Beispielsweise lassen sich Roboterbewegungsprogrammeteile der genannten Robotergruppierungen durch Spiegeln von Roboterbewegungsprogrammteilen an der vertikalen Ebene 22 von dem Lackierroboter 12 auf den Lackierroboter 15 übertragen.

Ein Bodenförderer 22, welcher beispielsweise durch zwei Schleppketten realisiert ist, dient dazu, eine erste Automobilkarosserie 30 in die Lackierkabine zu transportieren.

Fig. 2 zeigt eine Seitenansicht einer exemplarischen zweiten Lackierkabine 50 mit vier Lackierrobotern, wobei allerdings lediglich die Lackierroboter 52 und 53 gezeigt sind. Diese entsprechen vom Prinzip her den Lackierrobotern 12 und 13, welche in Fig. 1 gezeigt sind.

Lackierroboter 52 ist auf einer ersten Säule 54 montiert und Lackierroboter 53 auf einer zweiten Säule 56. Die erste Säule 54 ist vertikal höher als die zweite Säule 56, woraus sich ein vertikaler Versatz der Basen der Lackierroboter 52 und 53 ergeben. Dieser Versatz verringert in vorteilhafter Weise den gemeinsamen Arbeitsbereich der Lackierroboter 52 und 53.

Eine zweite Automobilkarosserie 70 befindet sich auf einer Haltevorrichtung 60, welche auf dem in diesem Bild nicht dargestellten Bodenförderer steht. Der Abstand der horizontalen Ebene 62 zu dem zu dieser parallel verlaufenden Kabinenboden 58 resultiert aus der vertikalen Höhe der zweiten Karosserie 70 beziehungsweise deren höchstem vertikalen Punkt sowie der Haltevorrichtung 60, auf der sich diese befindet und aus der Höhe des nicht gezeigten Kettenförderers gegenüber dem Kabinenboden 58. Dieser ist üblicherweise ein Gitterrost.

Die gezeigten Lackierroboter 52 und 53 sind mit einer horizontal verlaufenden ersten Achse montiert angedeutet. Die Lackierroboter 52 und 53 befinden sich mit ihren quadratisch angedeuteten Roboterbasen oberhalb der horizontalen Ebene 62, womit mehr Bewegungsfreiheit der jeweiligen Roboterarme unterhalb der Ebene 62 gewährleistet ist.

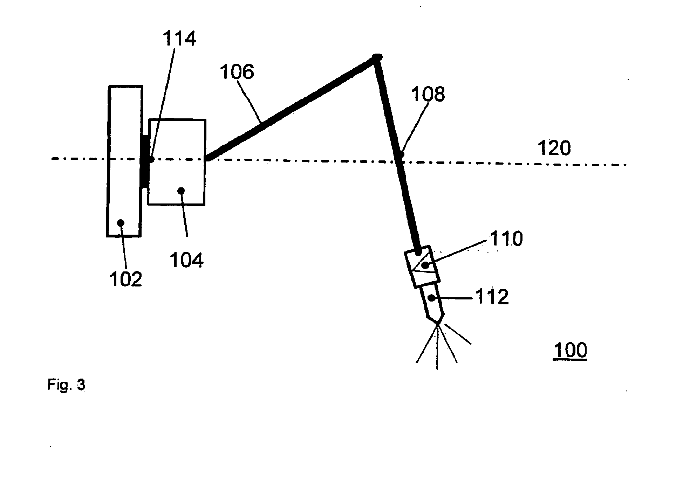

Fig. 3 zeigt einen beispielhaften möglichen Aufbau eines Lackierroboters 100. An einer Befestigungsvorrichtung102, welche Teil des Lackierroboters 100 ist, ist drehbar um die erste Drehachse 120 eine Roboterbasis 104 montiert. Die Befestigungsvorrichtung 102 ist beispielsweise direkt oder über ein Zwischenstück mit einer in diesem Bild nicht gezeigten Säule mit geeigneter Tragkraft und dynamischen Belastbarkeit verbunden. An der der Befestigungsvorrichtung zugewandten Seite der Roboterbasis ist der Schnittpunkt mit der ersten Drehachse 120 als Bezugspunkt 114 gekennzeichnet. An der Roboterbasis ist weiterhin der Roboterarm befestigt, welcher ein erstes Roboterarmstück 106, ein zweites Roboterarmstück 108 und ein Handgelenk 110 aufweist. An dem Handgelenk 110 ist ein Lackzerstäuber 112 befestigt.

Die Ausrichtung der ersten Drehachse 120 ist in Fig. 1 in einer bevorzugten horizontalen Ausrichtung mit einem Winkel von 0° gegenüber einer nicht gezeigten horizontalen Ebene dargestellt.

### Bezugszeichenliste

- 10: Draufsicht auf eine beispielhafte erste Lackierkabine mit einer erfindungsgemäßen Anordnung mit vier Lackierrobotern
- 11: Grundfläche erste Lackierkabine
- 12: Erster Lackierroboter
- 13: Zweiter Lackierroboter
- 14: Dritter Lackierroboter
- 15: Vierter Lackierroboter
- 16: Zwischenstück
- 20: Vertikale Ebene
- 22: Kettenförderer
- 30: erste Automobilkarosserie
- 50: Seitenansicht einer beispielhaften zweiten Lackierkabine mit einer erfindungsgemäßen Anordnung mit vier Lackierrobotern
- 51: Seitenwand zweite Lackierkabine
- 52: Fünfter Lackierroboter
- 53: Sechster Lackierroboter
- 54: Erste Säule
- 56: Zweite Säule
- 58: Lackierkabinenboden
- 60: Haltevorrichtung für Karosserie
- 62: Horizontale Ebene
- 70: zweite Automobilkarosserie
- 100: beispielhafter möglicher Aufbau eines Lackierroboters
- 102: Befestigungsvorrichtung
- 104: Roboterbasis
- 106: Erstes Roboterarmstück
- 108: Zweites Roboterarmstück
- 110: Handgelenk
- 112: Zerstäuber
- 114: Bezugspunkt
- 120: Erste Drehachse

## Patentansprüche

1. Anordnung von ortsfest montierten Lackierrobotern (12, 13, 14, 15, 52, 53, 100) in einer Lackierkabine (10, 50) mit einem Fördersystem, mit welchem zu lackierende Objekte in einer Förderrichtung ein- und ausförderbar sind, wobei die Lackierkabine (10, 50) durch eine gedachte vertikale Ebene (20), welche sich entlang einer Linie parallel zur Förderrichtung erstreckt, in einen ersten und einen zweiten räumlichen Bereich unterteilt ist, wobei in wenigstens einem der beiden Bereiche wenigstens zwei Lackierroboter (12, 13, 14, 15, 52, 53, 100) mit überlappbaren Arbeitsbereichen angeordnet sind, wobei ein jeweiliger Bezugspunkt (114) ein Schnittpunkt einer ersten Drehachse (120) mit einer Lackierroboterbasis (104) des betreffenden Lackierroboters (12, 13, 14, 15, 52, 53, 100) ist, und wobei jeder Bezugspunkt (114) oberhalb einer gedachten horizontalen Ebene (62) angeordnet ist, welche durch den vertikal höchsten Punkt eines vorgegebenen zu lackierenden Objektes (30, 70) in Lackierposition bestimmt wird,
**dadurch gekennzeichnet, dass** die Bezugspunkte (114) horizontal quer zur vertikalen Ebene (20) gegeneinander versetzt sind.

2. Anordnung nach Anspruch 1, **dadurch gekennzeichnet, dass** wenigstens einer der wenigstens zwei Lackierroboter (12, 13, 14, 15, 52, 53, 100) derart angeordnet ist, dass dessen erste Drehachse (120) innerhalb eines Winkelbereiches von -45° bis +45° gegenüber einer horizontalen Ebene verläuft.

3. Anordnung nach Anspruch 1 oder 2, **dadurch gekennzeichnet, dass** das vorgegebene zu lackierenden Objekt (30, 70) eine Automobilkarosserie ist.

4. Anordnung nach einem der vorangegangenen Ansprüche, **dadurch gekennzeichnet, dass** die wenigstens zwei Lackierroboter (12, 13, 14, 15, 52, 53, 100) mit ihren jeweiligen Bezugspunkten (114) wenigstens 1,5m oberhalb des Lackierkabinenbodens (58) angeordnet sind.

5. Anordnung nach einem der vorangegangenen Ansprüche, **dadurch gekennzeichnet, dass** die wenigstens zwei Bezugspunkte (114) wenigstens 0,25m in vertikaler Richtung gegeneinander versetzt sind.

6. Anordnung nach einem der vorangegangenen Ansprüche, **dadurch gekennzeichnet, dass** die wenigstens zwei Bezugspunkte (114) wenigstens 0,25m horizontal quer zur gedachten vertikalen Ebene (20) gegeneinander versetzt sind.

7. Anordnung nach einem der vorangehenden Ansprüche, **dadurch gekennzeichnet, dass** wenigstes zwei Lackierroboter (12, 13, 14, 15, 52, 53, 100) jeweils im ersten und zweiten Bereich der Lackierkabine angeordnet sind.

8. Anordnung nach Anspruch 7, **dadurch gekennzeichnet, dass** Lackierroboter (12, 13, 14, 15, 52, 53, 100) in dem ersten Bereich der Lackierkabine und dem zweiten Bereich der Lackierkabine (10, 50) jeweils gegenüberliegend mit höchstens einem horizontalen Versatz der Bezugspunkte parallel zur gedachten vertikalen Ebene (20) von 1,2m angeordnet sind.

9. Anordnung nach Anspruch 8, **dadurch gekennzeichnet, dass** gegenüberliegende Lackierroboter (12, 14; 13, 15) einen gegenläufigen Versatz in horizontaler Richtung quer zur vertikalen Ebene (20) aufweisen.

10. Anordnung nach Anspruch 8, **dadurch gekennzeichnet, dass** gegenüberliegende Lackierroboter (12, 14; 13, 15) einen gegenläufigen Versatz in vertikaler Richtung aufweisen.

11. Anordnung nach einem der vorangegangenen Ansprüche, **dadurch gekennzeichnet, dass** die verwendeten Lackierroboter (12, 13, 14, 15, 52, 53, 100) baugleich sind.

## Claims

1. Arrangement of fixedly mounted painting robots (12, 13, 14, 15, 52, 53, 100) in a painting booth (10, 50) having a conveying system with which objects to be painted can be conveyed in and out in a direction of conveyance, wherein the painting booth (10, 50) is subdivided by an imaginary vertical plane (20), which extends along a line parallel to the direction of conveyance, into a first and a second spatial region, wherein at least two painting robots (12, 13, 14, 15, 52, 53, 100) with overlappable working areas are arranged in at least one of the two regions, wherein a respective reference point (114) is a point of intersection of a first rotational axis (120) with a painting robot base (104) of the painting robot (12, 13, 14, 15, 52, 53, 100) concerned, and wherein each reference point (114) is arranged above an imaginary horizontal plane (62) which is determined by the vertically highest point of a predefined object (30, 70) to be painted in the painting position, **characterized in that** the reference points (114) are mutually offset horizontally, transversely to the vertical plane (20).

2. Arrangement according to Claim 1, **characterized in that** at least one of the at least two painting robots (12, 13, 14, 15, 52, 53, 100) is arranged in such a way that its first rotational axis (120) runs within an angular range of -45° to +45° relative to a horizontal plane.

3. Arrangement according to Claim 1 or 2, **characterized in that** the predefined object (30, 70) to be painted is a motor vehicle body.

4. Arrangement according to one of the preceding claims, **characterized in that** the at least two painting robots (12, 13, 14, 15, 52, 53, 100) are arranged with their respective reference points (114) at least 1.5 m above the painting booth floor (58).

5. Arrangement according to one of the preceding claims, **characterized in that** the at least two reference points (114) are mutually offset by at least 0.25 m in the vertical direction.

6. Arrangement according to one of the preceding claims, **characterized in that** the at least two reference points (114) are mutually offset by at least 0.25 m horizontally, transversely to the imaginary vertical plane (20).

7. Arrangement according to one of the preceding claims, **characterized in that** at least two painting robots (12, 13, 14, 15, 52, 53, 100) are respectively arranged in the first and second region of the painting booth.

8. Arrangement according to Claim 7, **characterized in that** painting robots (12, 13, 14, 15, 52, 53, 100) in the first region of the painting booth and the second region of the painting booth (10, 50) are arranged respectively opposite each other with, at most, a horizontal offset of the reference points parallel to the imaginary vertical plane (20) of 1.2 m.

9. Arrangement according to Claim 8, **characterized in that** opposite painting robots (12, 14; 13, 15) have an oppositely directed offset in the horizontal direction transversely to the vertical plane (20).

10. Arrangement according to Claim 8, **characterized in that** opposite painting robots (12, 14; 13, 15) have an oppositely directed offset in the vertical direction.

11. Arrangement according to one of the preceding claims, **characterized in that** the used painting robots (12, 13, 14, 15, 52, 53, 100) are structurally identical.

## Revendications

1. Agencement de robots de peinture (12, 13, 14, 15, 52, 53, 100) montés de façon stationnaire dans une cabine de peinture (10, 50) avec un système de convoyage, à l'aide duquel des objets à peindre sont transportables dans un sens et dans l'autre dans une direction de convoyage, la cabine de peinture (10, 50) étant divisée par un plan (20) vertical imaginaire, qui s'étend le long d'une ligne parallèle à la direction de convoyage en une première et en une deuxième zone dans l'espace, dans au moins l'une des deux zones étant disposés au moins deux robots de peinture (12, 13, 14, 15, 52, 53, 100) avec des zones de travail pouvant se chevaucher, un point de référence (114) respectif étant un point d'intersection d'un premier axe de rotation (120) avec une base de robot de peinture (104) du robot de peinture (12, 13, 14, 15, 52, 53, 100) concerné et chaque point de référence (114) étant disposé au-dessus d'un plan horizontal (62) imaginaire, lequel est déterminé par le point verticalement le plus haut d'un objet (30, 70) à peindre prédéfini en position de peinture,
**caractérisé en ce que** les points de référence (114) sont décalés l'un par rapport à l'autre horizontalement, transversalement au plan (20) vertical.

2. Agencement selon la revendication 1, **caractérisé en ce qu'**au moins l'un des au moins deux robots de peinture (12, 13, 14, 15, 52, 53, 100) est disposé de telle sorte que son premier axe de rotation (120) s'étende à l'intérieur d'une zone angulaire de -45° à +45° par rapport à un plan horizontal.

3. Agencement selon la revendication 1 ou la revendication 2, **caractérisé en ce que** l'objet (30, 70) à peindre prédéfini est une carrosserie automobile.

4. Agencement selon l'une quelconque des revendications précédentes, **caractérisé en ce que** les au moins deux robots de peinture (12, 13, 14, 15, 52, 53, 100) sont disposés de telle sorte que leurs points de référence respectifs (114) soient au moins 1,5m au-dessus du sol de la cabine de peinture (58).

5. Agencement selon l'une quelconque des revendications précédentes, **caractérisé en ce que** les au moins deux points de référence (114) sont décalés l'un par rapport à l'autre d'au moins 0,25m en direction verticale.

6. Agencement selon l'une quelconque des revendications précédentes, **caractérisé en ce que** les au moins deux points de référence (114) sont décalés l'un par rapport à l'autre d'au moins 0,25m horizontalement, transversalement au plan (20) vertical imaginaire.

7. Agencement selon l'une quelconque des revendications précédentes, **caractérisé en ce qu'**au moins deux robots de peinture (12, 13, 14, 15, 52, 53, 100) sont disposés chacun dans la première et dans la deuxième zone de la cabine de peinture.

8. Agencement selon la revendication 7, **caractérisé en ce que** des robots de peinture (12, 13, 14, 15, 52, 53, 100) dans la première zone de la cabine de peinture et dans la deuxième zone de la cabine de peinture (10, 50) sont disposés chacun à l'opposé avec au maximum un décalage horizontal des points de référence parallèlement au plan (20) vertical imaginaire de 1,2m.

9. Agencement selon la revendication 8, **caractérisé en ce que** des robots de peinture (12, 14 ; 13, 15) opposés présentent un décalage contraire en direction horizontale, transversalement au plan (20) vertical.

10. Agencement selon la revendication 8, **caractérisé en ce que** des robots de peinture (12, 14 ; 13, 15) opposés présentent un décalage contraire en direction verticale.

11. Agencement selon l'une quelconque des revendications précédentes, **caractérisé en ce que** les robots de peinture (12, 13, 14, 15, 52, 53, 100) utilisés sont de construction identique.
